# EUROPEAN PATENT APPLICATION

(11) **EP 4 826 772 A1**
(43) Date of publication of application: **21.10.2026**
(21) Application number: 26165987.4
(22) Date of filing: 19.03.2026
(51) Int. Cl.: H01M 4/133, H01M 4/587, H01M 4/1393, H01M 50/46, H01M 4/02

(54) **SECONDARY BATTERY AND METHOD OF MANUFACTURING THE SAME**

(30) Priority: 14.04.2025 JP 2025066293
(71) Applicant: Toyota Jidosha Kabushiki Kaisha, Toyota-shi, Aichi-ken 471-8571 (JP)
(72) Inventor: TAKASU, Junta, Toyota-shi, 471-8571 (JP)
(74) Representative: Kuhnen & Wacker Patent- und Rechtsanwaltsbüro PartG mbB

(57) **Abstract**

A secondary battery (1) may include a positive electrode (112) and a negative electrode (114) facing each other with a separator (116) interposed therebetween. The negative electrode may include a negative electrode current collector (122), a negative electrode composite layer (10) disposed on the negative electrode current collector and containing graphite particles (11) and a binder (14), and a resin layer (12) disposed between a surface of the negative electrode composite layer and the separator. The negative electrode composite layer may include a surface layer (10A) in contact with the resin layer and a main layer (10B) between the surface layer and the negative electrode current collector. In an XRD profile of the main layer, a degree of orientation, defined as an intensity ratio of a (110) plane to a (002) plane of a graphite crystal, may be 0.03 or greater.

## Description

### CROSS REFERENCE TO RELATED APPLICATION

This application claims priority to Japanese Patent Application No. 2025-066293 filed on April 14, 2025. The entire content of the priority application is incorporated herein by reference.

### TECHNICAL FIELD

The art disclosed herein relates to a secondary battery and a method of manufacturing a secondary battery.

### BACKGROUND ART

A negative electrode used in a secondary battery includes a conductive negative electrode current collector and a negative electrode composite layer located on the negative electrode current collector. The negative electrode composite layer contains graphite particles each having a layered crystalline structure. Charge-discharge function is achieved by interlayer metal ion insertion and extraction between the layers of the graphite particles. In view of this, technologies have been proposed that orient layer planes of graphite particles substantially perpendicular to a negative electrode current collector by utilizing the magnetic alignment property of the graphite particles (e.g., Japanese Translation of PCT International Application Publication No. 2018-517267). The closer the orientation of layer planes of graphite particles is to being perpendicular to the negative electrode current collector, the more smoothly metal ions can be inserted into and extracted from between the layers of the graphite particles. This improves performance of the secondary battery.

### SUMMARY

A surface layer of a negative electrode composite layer is bonded to a separator. Magnetically aligning the graphite particles in the negative electrode composite layer increases angles formed between the surface planes of the graphite particles and the surface of the negative electrode current collector. Thus, the surface roughness of the surface layer of the negative electrode composite layer increases with magnetically aligned graphite particles, compared to without magnetically aligned graphite particles. This may negatively affect the bonding between the surface layer of the negative electrode composite layer and the separator.

In a first aspect of the technology disclosed herein, a secondary battery may comprise a positive electrode and a negative electrode facing each other with a separator interposed therebetween. The negative electrode may comprise a negative electrode current collector; a negative electrode composite layer disposed on the negative electrode current collector and containing graphite particles and a binder; and a resin layer disposed between a surface of the negative electrode composite layer and the separator. The negative electrode composite layer may comprise a surface layer in contact with the resin layer; and a main layer located between the surface layer and the negative electrode current collector. In an XRD profile of the main layer, a degree of orientation, which is defined as an intensity ratio obtained by dividing an intensity of a (110) plane of a graphite crystal by an intensity of a (002) plane of the graphite crystal, may be 0.03 or greater. A content of a material of the resin layer in the surface layer may be higher than a content of the binder in the main layer.

According to the configuration above, the content of the material of the resin layer in the surface layer is higher than the content of the binder in the main layer. This allows depressions in a surface of the surface layer to be filled with the resin layer. Therefore, flatness of the surface layer on which the resin layer is formed is improved compared to a surface layer on which the resin layer is not formed. Thus, bonding between the surface layer of the negative electrode composite layer and the separator is improved.

### BRIEF DESCRIPTION OF DRAWINGS

FIG. 1 is a perspective view of a secondary battery 1.
FIG. 2 is an exploded plan view of an electrode assembly 108.
FIG. 3 is a cross-sectional view of a negative electrode 114.
FIG. 4 is a flowchart illustrating a method of manufacturing the secondary battery 1.
FIG. 5 is a diagram illustrating an example of a first paste preparation step.
FIG. 6 is a diagram illustrating steps S20 to S55.
FIG. 7 is a diagram illustrating steps S100 and S110.
FIG. 8 is a diagram illustrating a hot-pressing step.
FIG. 9 is a cross-sectional view of a negative electrode according to a first comparative example.
FIG. 10 is a cross-sectional view of a negative electrode composite layer 10 formed in step S50.
FIG. 11 is a cross-sectional view of the negative electrode composite layer 10 having a resin layer 12 formed thereon in step S55.
FIG. 12 is a diagram illustrating orientation angle of graphite particles 11.

### DETAILED DESCRIPTION

In a second aspect of the technology disclosed herein according to the first aspect above, an orientation angle may be defined as an angle formed between a layer plane of the graphite particle having a layered structure and a surface of the negative electrode current collector, and an average orientation angle in the surface layer may be 45 degrees or greater.

The configuration above allows metal ions migrating from the positive electrode to be easily inserted between the graphite particles in the surface layer, which serves as an inlet for the metal ions. This reduces the internal resistance in the secondary battery.

In a third aspect of the technology disclosed herein according to the first or second aspect, the material of the resin layer may be same as a material of the binder.

According to the configuration above, the resin layer has a bonding property.

In a fourth aspect of the technology disclosed herein according to the first to third aspects, the material of the resin layer may include an ion-permeable resin.

According to the configuration above, the resin layer does not hinder migration of metal ions.

In a fifth aspect of the technology disclosed herein according to the first to fourth aspects, the material of the resin layer and the binder may include an acrylic resin or polyvinylidene fluoride resin.

The technology disclosed herein is also embodied in a method of manufacturing a secondary battery. A sixth aspect of the technology disclosed herein is directed to a method of manufacturing a secondary battery in which a positive electrode and a negative electrode face each other with a separator interposed therebetween. The method may comprise forming an adhesive layer on a surface of the separator; applying a paste containing graphite particles and a solvent onto a surface of a negative electrode current collector to form a negative electrode composite layer; applying an external magnetic field to the negative electrode composite layer; drying the negative electrode composite layer after the external magnetic field has been applied; forming a resin layer constituted of an ion-permeable resin on a surface of the negative electrode composite layer after the drying; and heating the adhesive layer and the resin layer while the adhesive layer and the resin layer are in contact with each other.

According to the configuration above, the adhesive layer and the negative electrode composite layer are bonded to each other via the resin layer having high fluidity. The resin layer flows into gaps formed by the magnetic alignment of the graphite particles. This improves bonding between the negative electrode composite layer and the separator.

In a seventh aspect of the technology disclosed herein according to the sixth aspect, the applying of the paste may include applying the ion-permeable resin onto the surface of the negative electrode composite layer.

In an eighth aspect of the technology disclosed herein according to the sixth or seventh aspect, a thickness of the resin layer may be greater than an arithmetic mean roughness of the surface of the negative electrode composite layer.

According to the configuration above, the resin layer has a sufficient volume to fill depressions in the surface of the negative electrode composite layer.

In a ninth aspect of the technology disclosed herein according to the sixth to eighth aspects, the resin layer may include an acrylic resin or polyvinylidene fluoride resin.

Representative, non-limiting examples of the present disclosure will now be described in further detail with reference to the attached drawings. This detailed description is merely intended to teach a person of skill in the art further details for practicing preferred aspects of the present teachings and is not intended to limit the scope of the disclosure. Furthermore, each of the additional features and teachings disclosed below may be utilized separately or in conjunction with other features and teachings to provide improved secondary batteries and methods of manufacturing the same.

Moreover, combinations of features and steps disclosed in the following detailed description may not be necessary to practice the disclosure in the broadest sense, and are instead taught merely to particularly describe representative examples of the disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

The grammatical articles "a," "an," and "the," as used in this specification, including the claims, are intended to include "at least one" or "one or more" unless otherwise indicated. Thus, the articles are used in this specification to refer to one or more than one (i.e., to "at least one") of the grammatical objects of the article. By way of example, "a component" means one or more components and, thus, possibly more than one component is contemplated and can be employed or used in an implementation of the described compositions, coatings, and processes. Nevertheless, it is understood that use of the terms "at least one" or "one or more" in some instances, but not others, will not result in any interpretation where failure to use the terms limits objects of the grammatical articles "a," "an," and "the" to just one. Further, the use of a singular noun includes the plural, and the use of a plural noun includes the singular, unless the context of the usage requires otherwise.

### Embodiment

### Structure of Secondary Battery 1

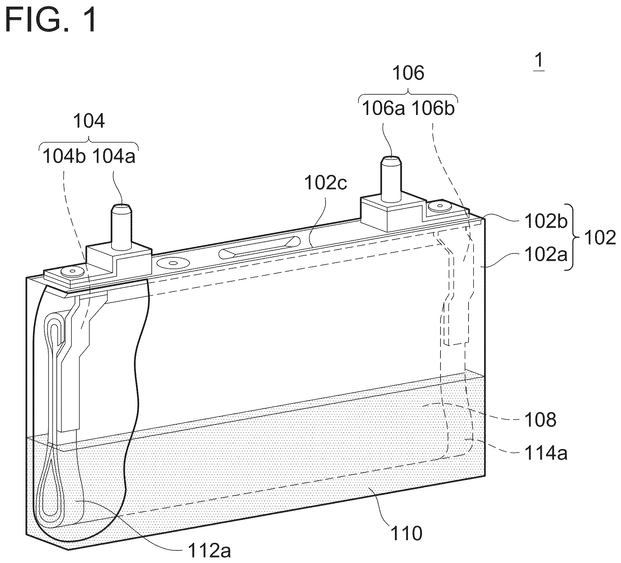

FIG. 1 is a perspective view of a secondary battery 1 according to an embodiment. In this embodiment, the secondary battery 1 is exemplified as a lithium-ion secondary battery. As illustrated in FIG. 1, the secondary battery 1 comprises a housing 102, a positive electrode terminal 104, a negative electrode terminal 106, an electrode assembly 108, and a non-aqueous electrolyte 110. The housing 102 houses the electrode assembly 108 and the non-aqueous electrolyte 110. The housing 102 comprises a housing body 102a and a cover plate 102b. The housing body 102a is an enclosure having an opening 102c in its upper portion. The cover plate 102b is attached to the opening 102c to close the opening 102c.

The positive electrode terminal 104 and the negative electrode terminal 106 are attached to the cover plate 102b. An end portion 104a of the positive electrode terminal 104 is exposed to the outside of the housing 102. The other end portion 104b of the positive electrode terminal 104 is connected to a positive electrode connecting portion 112a of the electrode assembly 108 within the housing 102. An end portion 106a of the negative electrode terminal 106 is exposed to the outside of the housing 102. The other end portion 106b of the negative electrode terminal 106 is connected to a negative electrode connecting portion 114a of the electrode assembly 108 within the housing 102.

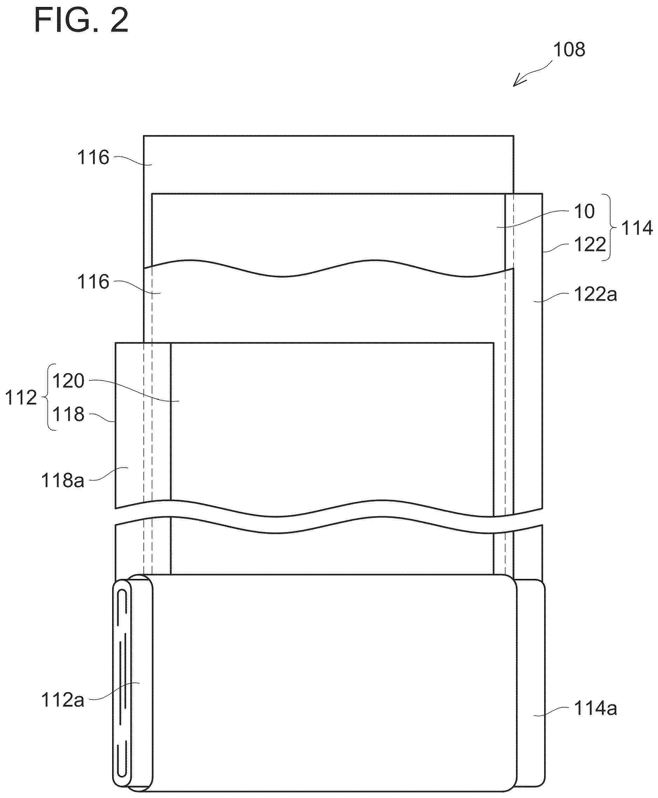

FIG. 2 is an exploded plan view of the electrode assembly 108. The electrode assembly 108 comprises a positive electrode 112, a negative electrode 114, and a separator 116. Each of the positive electrode 112, the negative electrode 114, and the separator 116 has an elongated sheet shape. The positive electrode 112 and the negative electrode 114 are stacked with the separator 116 interposed therebetween. The stack of the positive electrode 112 and the negative electrode 114 is rolled up to form the electrode assembly 108. However, the electrode assembly 108 is not necessarily a rolled electrode assembly. The electrode assembly 108 may, for example, be a so-called stacked electrode assembly in which multiple positive electrodes 112 and multiple negative electrodes 114 are alternately stacked with a separator 116 interposed between each pair of the positive electrode 112 and the negative electrode 114.

The positive electrode 112 comprises a positive electrode current collector 118 and a positive electrode active material sheet 120. The positive electrode current collector 118 is a conductive sheet. The positive electrode current collector 118 is, for example, an aluminum foil. The positive electrode active material sheet 120 is located on a surface of the positive electrode current collector 118. The positive electrode active material sheet 120 comprises a positive electrode active material. The positive electrode active material is, for example, a lithium composite oxide. The positive electrode 112 comprises a positive electrode exposure portion 118a in one of its widthwise side portions, and the positive electrode current collector 118 is exposed in the positive electrode exposure portion 118a. The positive electrode exposure portion 118a is rolled up in forming the electrode assembly 108 to form the positive electrode connecting portion 112a.

The negative electrode 114 comprises a negative electrode current collector 122 and a negative electrode composite layer 10. The negative electrode current collector 122 is a conductive sheet. The negative electrode current collector 122 is, for example, a copper foil. The negative electrode composite layer 10 is located on a surface of the negative electrode current collector 122. The negative electrode 114 will be detailed more specifically later. The negative electrode 114 comprises a negative electrode exposure portion 122a in one of its widthwise side portions, and the negative electrode current collector 122 is exposed in the negative electrode exposure portion 122a. The negative electrode exposure portion 122a is rolled up in forming the electrode assembly 108 to form the negative electrode connecting portion 114a.

The separator 116 is configured to allow charge carriers (i.e., lithium ions herein) to pass therethrough. Examples of the separator 116 include, for example, porous polymer films such as porous polyethylene films, porous polypropylene films, porous polyolefin films, and porous polyvinyl chloride films and lithium-ion-conductive polymer electrolyte membranes. One of these may be used as the separator 116, or some of these may be used in combination as the separator 116.

An adhesive layer 13 is formed on a surface of the separator 116. The adhesive layer 13 will be detailed later.

The non-aqueous electrolyte 110 permeates the interior of the electrode assembly 108. The non-aqueous electrolyte 110 comprises a non-aqueous solvent and an electrolyte salt. Examples of the non-aqueous solvent include, for example, carbonate-based solvents, ether-based solvents, ester-based solvents, nitrile-based solvents, sulfone-based solvents, and lactone-based solvents. The electrolyte salt is, for example, a fluorine-containing lithium salt. Each of the non-aqueous solvent and the electrolyte salt may comprise a single material or a combination of materials.

### Structure of Negative Electrode 114

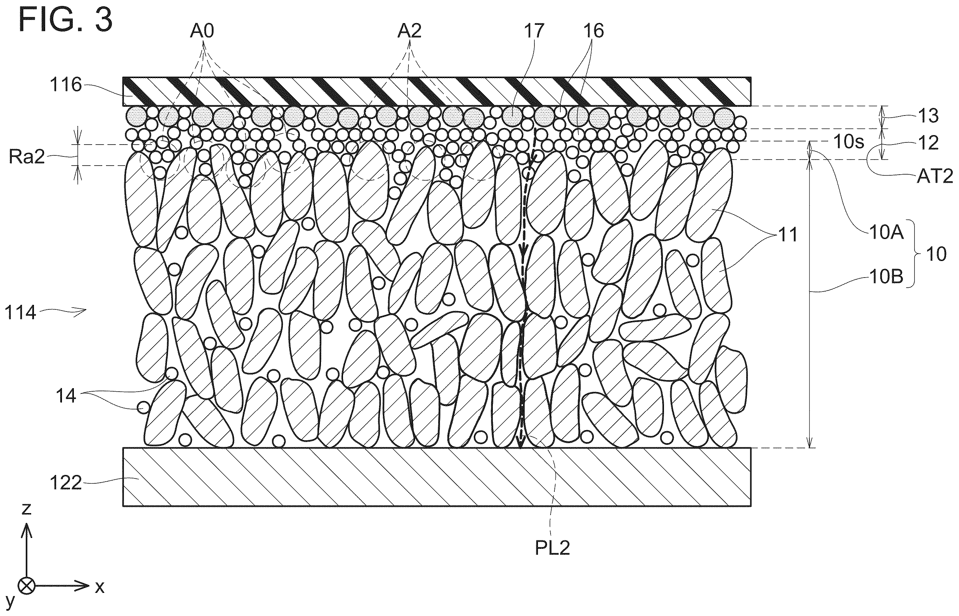

FIG. 3 illustrates a cross-sectional view of the negative electrode 114. FIG. 3 also illustrates the separator 116. In FIG. 3, directions parallel to the negative electrode current collector 122 are labeled as an x-direction and y-direction, and a direction perpendicular to the negative electrode current collector 122 (a thickness direction of the negative electrode 114) is labeled as a z-direction. For clarity of illustration, only one of a plurality of components may be labeled with a reference sign. This applies to all the drawings. The negative electrode 114 mainly comprises the negative electrode current collector 122, the negative electrode composite layer 10, a resin layer 12, and an adhesive layer 13.

The resin layer 12 is located between a surface 10s of the negative electrode composite layer 10 and the adhesive layer 13. The resin layer 12 comprises resin but does not contain additive particles 17. The material of the resin layer 12 may be an ion-permeable resin. In this case, migration of lithium ions is not hindered by the resin layer 12. In FIG. 3, for clarity of illustration, the resin layer 12 is schematically depicted as small white circles. The material of the resin layer 12 may be any material. For example, the material of the resin layer 12 may be the same as the material of a binder 14, which will be described later. In this case, the resin layer 12 has a bonding property. In the present embodiment, the material of the resin layer 12 is the same PVDF as that of the binder 14.

The resin layer 12 has an average thickness AT2. The average thickness AT2 of the resin layer 12 is greater than a surface roughness Ra2 of the surface 10s of the negative electrode composite layer 10. For example, when the surface roughness Ra2 defined in arithmetic mean roughness is 1.5 µm, the average thickness AT2 is greater than 1.5 µm. The surface roughness Ra2 will be detailed later.

The adhesive layer 13 is in contact with the separator 116. The adhesive layer 13 contains resin 16 and additive particles 17. That is, the adhesive layer 13 comprises the resin 16 as its base material. In FIG. 3, for clarity of illustration, the resin 16 is schematically depicted as small white circles, and the additive particles 17 are schematically depicted as gray-shaded circles. The material of the resin 16 may be the same as the material of a binder 14, which will be described later. In the present embodiment, the material of the resin is the same PVDF as the material of the binder 14.

The material of the additive particles 17 may be heat-resistant, electrically insulating, and highly resistant to the electrolyte. Examples of the material of the additive particles 17 include metal compounds and polymeric compounds such as polyimide. Examples of the metal compounds include alpha-alumina (α-Al₂O₃), boehmite (Al₂O₃ · H₂O), magnesium hydroxide (Mg(OH)₂), and magnesium carbonate (MgCO₃). One or more of these materials may be used as the material of the additive particles 17.

The additive particles 17 contained in the adhesive layer 13 are bonded to each other by the resin 16, thereby forming a heat-resistant porous layer. This prevents an internal short circuit in the secondary battery 1.

The negative electrode composite layer 10 is located on the negative electrode current collector 122. The negative electrode composite layer 10 comprises graphite particles 11, the binder 14, and a conductive additive (not illustrated). For the graphite particles 11, graphite-based carbon materials, such as natural graphite, synthetic graphite, or amorphous forms thereof, may be used. The graphite particles 11 may comprise, for example, flat flake graphite or spherical graphite obtained by sphering flake graphite. In the present embodiment, flake graphite is used as the graphite particles 11. This is because flake graphite can be stably aligned by application of magnetic field due to its flatness.

In FIG. 3, the graphite particles 11 are hatched. The median diameter of the graphite particles 11 is, for example, in the range of 15 to 40 micrometers. The median diameter herein means the particle diameter (D50) at 50% cumulative volume in a volume-based particle size distribution measured by a laser diffraction/scattering method. In the present embodiment, the median diameter of the graphite particles 11 is 20 micrometers.

The binder 14 is a component to bind the graphite particles 11 together. The binder 14 is incorporated in the negative electrode composite layer 10. The binder 14 comprises resin particles. In FIG. 3, the binder 14 is schematically depicted as white circles. Examples of the binder 14 include, for example, polyvinylidene fluoride (PVDF), various acrylic-based resins, carboxymethyl cellulose (CMC), styrene-butadiene rubber (SBR), and polytetrafluoroethylene (PTFE).

As the acrylic-based resins may be homopolymers obtained by polymerizing a single monomer, such as acrylic acid, methacrylic acid, acrylamide, methacrylamide, 2-hydroxyethyl acrylate, 2-hydroxyethyl methacrylate, methacrylate, methyl methacrylate, 2-ethylhexyl acrylate, and butyl acrylate. Alternatively, the acrylic-based resins may be copolymers obtained by polymerizing two or more of the above-listed monomers.

The binder 14 may comprise a single material or a combination of materials. In the present embodiment, the material of the binder 14 is PVDF.

The negative electrode composite layer 10 comprises a surface layer 10A and a main layer 10B. The surface layer 10A is in contact with the resin layer 12. The main layer 10B is located between the surface layer 10A and the negative electrode current collector 122. The roughness of the surface 10s of the surface layer 10A is the surface roughness Ra2. Various parameters may be used for the surface roughness Ra2. Herein, arithmetical mean roughness is used as surface roughness. The arithmetical mean roughness can be measured according to JIS B 0601:2001. The same applies to a surface roughness Ra1 which will be described later.

At the surface 10s, there are many gaps between the graphite particles 11. These gaps are filled by the resin layer 12. In other words, the resin layer 12 is included in the surface layer 10A. Herein, the content of the resin layer 12 in the surface layer 10A is termed a resin layer content, and the content of the binder 14 in the main layer 10B is termed a binder content. The resin layer content is higher than the binder content. For example, the resin layer content may be 50% or greater, and the binder content may be 5% or less.

As above, the surface layer 10A and the main layer 10B can be distinguished from each other based on whether the resin layer content is higher than the binder content or not. That is, the boundary between the surface layer 10A and the main layer 10B can be defined based on the resin layer content.

### Degree of Orientation of Graphite Particles

As described above, the graphite particles 11 comprise flat flake graphite. The flake graphite comprises a stack of numerous plate-shaped (graphene) layers each having a hexagonal crystal structure. Therefore, the graphite particles 11 each have a substantially plate shape. Further, the graphite particles 11 each comprise a (002) plane and a (110) plane. The (002) plane is a layer plane of the layered graphite particle (i.e., a plane parallel to graphite layers). The (002) plane is parallel to a carbon network of graphene sheets of the graphite particle 11. The (110) plane is an end plane of the layered graphite particle (i.e., a plane perpendicular to the graphite layers). The (110) plane is perpendicular to the (002) plane of the graphite particle. In other words, as illustrated in FIG. 3, each graphite particle 11 has an elongated shape in which the length in the direction parallel to the layer plane is greater than the length in the direction perpendicular to the layer plane.

Here, "degree of orientation" of the graphite particles 11 is defined as follows. The peak intensity derived from the (110) plane of the graphite particle 11 measured by powder X-ray diffraction (XRD) is denoted as PI1. The peak intensity derived from the (002) plane is denoted as PI2. The peak intensity PI1 is derived from the a-b axis direction of the graphite crystal. The peak intensity PI2 is derived from the c-axis direction of the graphite crystal. Then, the intensity ratio obtained by dividing the peak intensity PI1 by the peak PI2 is defined as the degree of orientation. That is, the degree of orientation = PI1/PI2.

A larger degree of orientation can be construed as meaning that there are more graphite particles 11 with their c-axes oriented parallel to the negative electrode current collector 122 (i.e., along the x-y plane in FIG. 3) in the negative electrode composite layer 10. That is, a larger degree of orientation means that the proportion of graphite particles 11 whose layer planes (longitudinal planes) are angled relative to the surface of the negative electrode current collector 122 is higher.

The inventors of the present invention have found that the degree of orientation in the main layer 10B is less than 0.03 when the magnetic alignment described below is not performed, and that the magnetic alignment can increase the degree of orientation in the main layer 10B to 0.03 or greater. That is, whether the magnetic alignment has been performed or not can be determined based on whether the degree of orientation in the main layer 10B is 0.03 or greater or not.

### Method of Manufacturing Secondary Battery

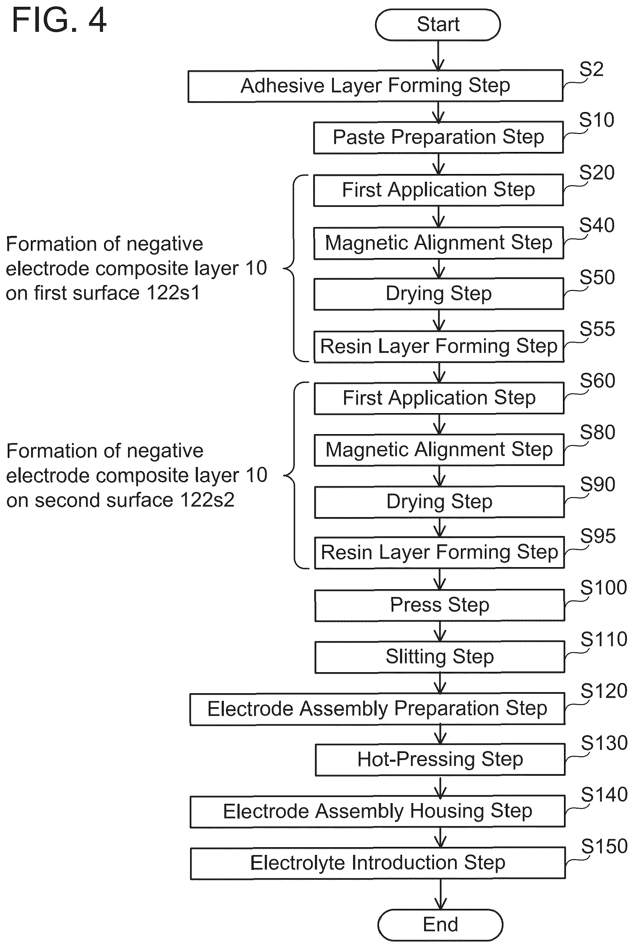

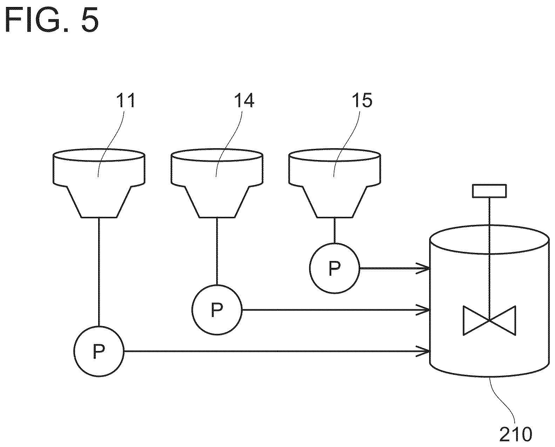

Referring to the flowchart illustrated in FIG. 4 and the schematic diagrams illustrated in FIGS. 5 to 8, a method of manufacturing the above-described secondary battery 1 is described. In step S2, the adhesive layer 13 is formed on a surface of the separator 116 (adhesive layer forming step). A coating composition used to form the adhesive layer 13 is a paste-like composition in which the resin 16, the additive particles 17 are dispersed in a solvent. This coating composition is applied onto a surface of the separator 116. For this application, a conventional, common application device may be used. Examples of the application device include, for example, gravure coaters, slit coaters, die coaters, comma coaters, and dip coaters. After the application, the solvent is removed using an appropriate drying means. As a result, the adhesive layer 13 is formed.

In step S10, a first paste is prepared (paste preparation step). The first paste contains the graphite particles 11. The paste may be in the form of a slurry or an ink.

Referring to FIG. 5, an example of first paste preparation step is described. The graphite particles 11, the binder 14, and the conductive additive 15 are introduced into a kneader 210 in respective predetermined amounts. A solvent is added to the materials in the kneader 210, and the mixture is kneaded to produce the first paste. The kneader 210 may be any type. For example, a planetary mixer may be used as the kneader 210.

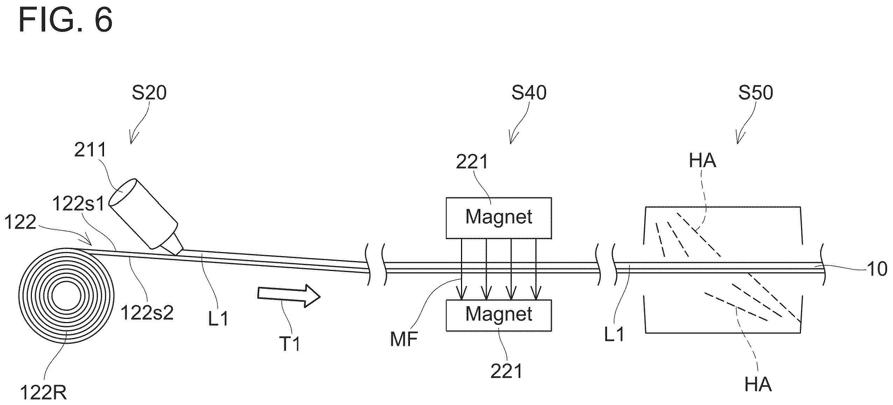

From step S20 to step S55, the negative electrode composite layer 10 is formed on a first surface 122s1 of the negative electrode current collector 122. These steps are specifically described referring to FIG. 6. In step S20, a first application step is performed. In the first application step, the first paste containing the graphite particles 11 is applied onto the surface of the negative electrode current collector 122. Specifically, the negative electrode current collector 122 is fed out in a feed direction T1 at a constant speed from a roll 122R around which the negative electrode current collector 122 is wound. Then, the first paste is applied onto the negative electrode current collector 122 using a first coater 211. As a result, a first layer L1 is formed. The first coater 211 may be any type of coater. For example, the first coater 211 may be a slot-die coater.

In step S40, an external magnetic field is applied to the first layer L1 (magnetic alignment step). Specifically, a magnetic field whose magnetic flux lines MF are approximately perpendicular to the surface of the negative electrode current collector 122 is applied using a magnetic field generator 221. The magnetic field generator 221 may, for example, be a permanent magnet or an electromagnet. In this step, the (002) planes of the graphite particles 11 are oriented substantially parallel to the magnetic flux lines.

In step S50, the first layer L1 is dried (drying step). Specifically, these layers are dried by blowing hot air HA thereto. The drying means used in the drying step is not limited to hot air and may be low-humidity air, vacuum, infrared radiation, far-infrared radiation, or electron-beam irradiation or any combination thereof. In the drying step, the solvents are removed from the first layer L1. As a result, the negative electrode composite layer 10 is formed on the first surface 122s1 of the negative electrode current collector 122.

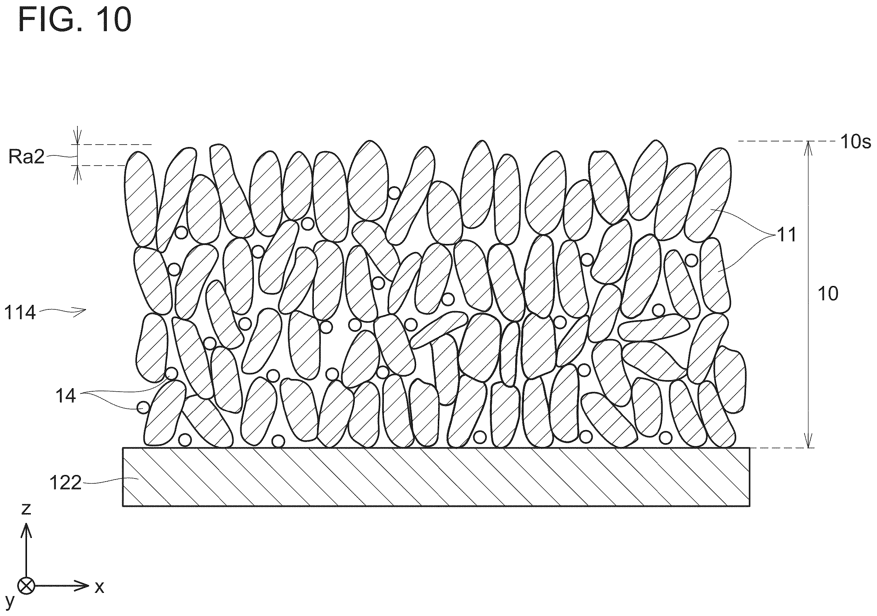

FIG. 10 illustrates the negative electrode composite layer 10 formed in step S50. FIG. 10 illustrates a cross-sectional view similar to that illustrated in FIG. 3. At this stage, the surface 10s of the negative electrode composite layer 10 is exposed. Since the graphite particles 11 are magnetically aligned, the surface roughness Ra2 of the surface 10s is large.

In step S55, the resin layer 12 is formed on the surface of the negative electrode composite layer 10 after the drying step (resin layer forming step). Specifically, a coating composition in which resin is dispersed in a solvent is prepared. Then, this coating composition is applied onto the surface of the negative electrode composite layer 10. After the application, a drying step is performed if needed. Since conventional, common devices can be used for the application step and drying step in step S55, detailed description thereof is omitted.

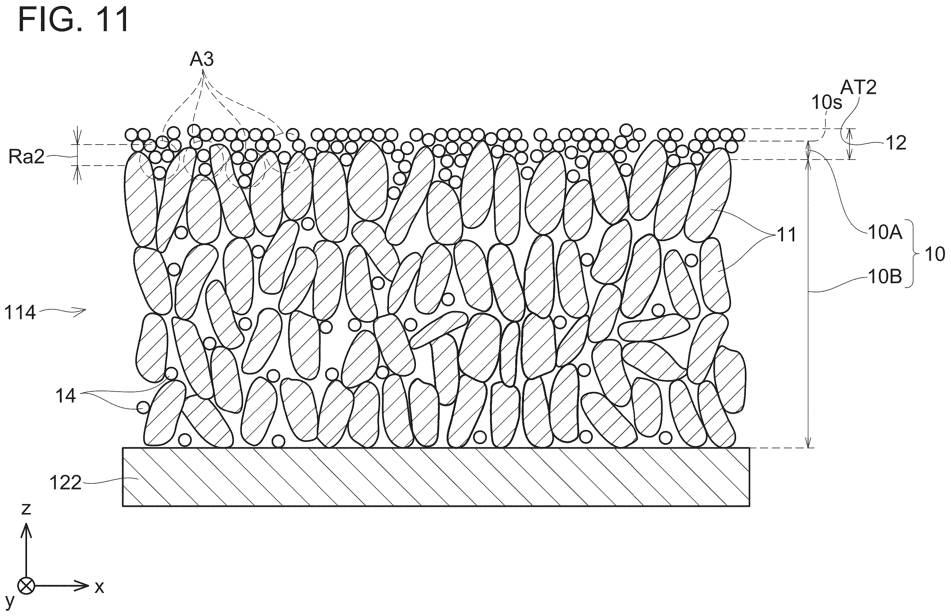

FIG. 11 illustrates the negative electrode composite layer 10 having the resin layer 12 formed thereon in step S55. FIG. 11 illustrates a cross-sectional view similar to that illustrated in FIG. 10. Since depressions in the surface 10s are filled with the resin layer 12, the surface roughness of the surface 10s is improved.

From step S60 to step S95, the negative electrode composite layer 10 is formed on a second surface 122s2 of the negative electrode current collector 122. Since steps S60, S80, S90 and S95 are the same as steps S20, S40, S50 and S55 described above, detailed description thereof is omitted. As a result of steps S60 to S95, the negative electrode 114 is formed. The negative electrode 114 has a structure where the negative electrode composite layers 10 are located on both surfaces of the negative electrode current collector 122, respectively.

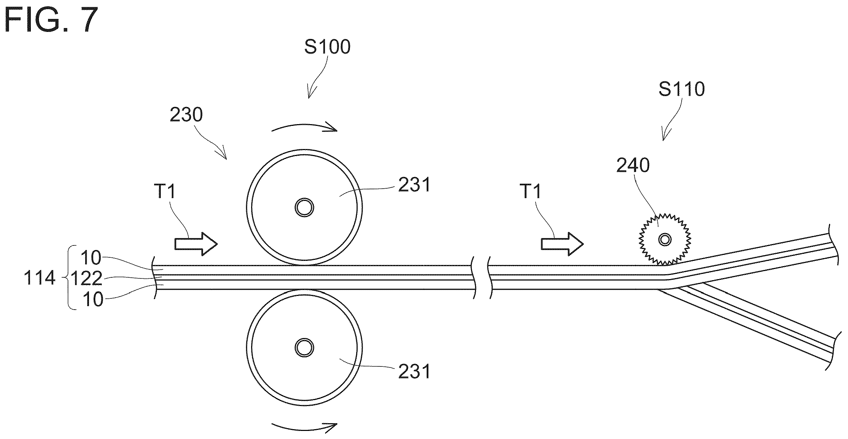

In step S100, the negative electrode 114 is pressed (press step). As illustrated in FIG. 7, a roll-press device 230 is used in the press step, although this is merely an example. The roll-press device 230 is configured to roll out the negative electrode 114 while it passes between a pair of rollers 231. The density and thickness of the negative electrode composite layers 10 can thereby be adjusted.

In step S110, slitting is performed. As illustrated in FIG. 7, during slitting, the negative electrode 114 is cut by a cutter 240 while fed in the feed direction T1. Thereby, the width of the negative electrode 114 in its transverse direction can be cut into the width corresponding to the size of the secondary battery 1.

In step S120, the electrode assembly 108 is prepared (electrode assembly preparation step). As illustrated in FIG. 2, in the electrode assembly preparation step, the positive electrode 112, the negative electrode 114, and the separator 116 are stacked on top of each other such that the positive electrode 112 and the negative electrode 114 face each other with the separator 116 interposed therebetween. Then, the stack of the positive electrode 112 and the negative electrode 114 is rolled up.

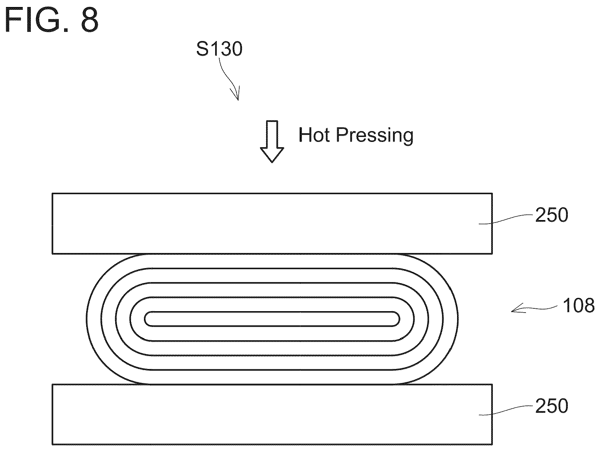

In step S130, the electrode assembly 108 is hot-pressed (hot-pressing step). As illustrated in FIG. 8, a flat platen press 250 is used in the hot-pressing step, although this is merely an example. Thereby, the electrode assembly 108 is compressed to have a flat shape having a predetermined thickness. In the hot-pressing step, the adhesive layer 13 and the resin layer 12 are heated while they are in contact with each other, as illustrated in FIG. 3. Thereby, the separator 116 and the negative electrode composite layer 10 can be bonded to each other via the resin layer 12. This hot-pressing step may be performed after an electrolyte introduction step (S150), which will be described later.

In step S140, an electrode assembly housing step is performed. Specifically, as illustrated in FIG. 1, the positive electrode terminal 104 and the negative electrode terminal 106 attached to the cover plate 102b are welded to opposing end portions of the electrode assembly 108, respectively. The electrode assembly 108 is housed into the housing body 102a through the opening 102c. Then, the housing body 102a and the cover plate 102b are bonded together, for example, by laser welding.

In step S150, the non-aqueous electrolyte is introduced into the housing 102 through an inlet (not illustrated) (electrolyte introduction step). Then, the inlet is hermetically sealed using a sealing member. As a result, the secondary battery 1 is completed.

### Problem

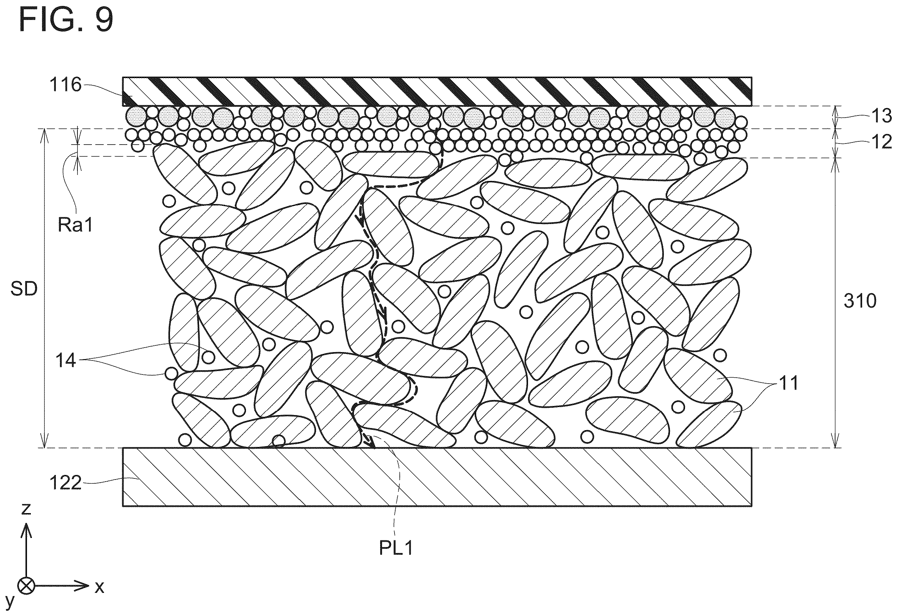

Referring to a first comparative example illustrated in FIG. 9 and the embodiment illustrated in FIG. 3, a problem is described. FIG. 9 illustrates cross-sectional views similar to FIG. 3. The first comparative example (FIG. 9) is different from the embodiment (FIG. 3) in that the negative electrode composite layer 310 is not magnetically aligned yet.

The negative electrode composite layer 310 of the first comparative example (FIG. 9) is not magnetically aligned yet. Therefore, the surface planes (longitudinal planes) of the graphite particles 11 are not oriented substantially perpendicular to the negative electrode current collector 122 (i.e., along the z-direction). Thus, a path length PL1 of pores from the separator 116 to the negative electrode current collector 122 is large. That is, the tortuosity in the negative electrode composite layer 310 is large. The tortuosity herein is defined as a ratio of the path length PL1 to a straight-line distance SD from the separator 116 to the negative electrode current collector 122. A larger tortuosity leads to less smooth insertion and extraction of Li ions into and from between the layers of the graphite particles 11. Thus, a larger tortuosity increases internal resistance in the secondary battery 1 and impairs the performance of the secondary battery 1.

In contrast, the negative electrode composite layer 10 of the embodiment (FIG. 3) is magnetically aligned. Therefore, the surface planes (longitudinal planes) of the graphite particles 11 are oriented substantially perpendicular to the negative electrode current collector 122 (i.e., along the z-direction). Thus, a path length PL2 of pores in the embodiment is shorter than the path length PL1 of pores in the first comparative example. That is, the tortuosity in the embodiment is smaller than that in the first comparative example, which reduces the internal resistance. However, when the graphite particles 11 are magnetically aligned, angles formed between the surface planes of the graphite particles 11 and the surface of the negative electrode current collector 122 are larger. Thus, sharp end planes (i.e., (110) planes) of the graphite particles 11 project upward from the surface of the negative electrode composite layer 10 (see areas A2). This makes a surface roughness Ra2 of the negative electrode composite layer 10 of the embodiment greater than a surface roughness Ra1 of the negative electrode composite layer 310 of the first comparative example. Therefore, the bonding between the magnetically aligned negative electrode composite layer and the separator 116 may be worse than the bonding between the non-magnetically aligned negative electrode composite layer and the separator 116.

### Advantageous Effects

In the negative electrode composite layer 10 according to the embodiment (FIG. 3), the degree of orientation is 0.03 or greater. That is, the negative electrode composite layer 10 is magnetically aligned. Since the tortuosity in the negative electrode composite layer 10 is small, the internal resistance is reduced. Further, the resin layer content, which is the content of the resin layer 12 in the surface layer 10A, is higher than the binder content, which is the content of the binder 14 in the main layer 10B. Thus, the surface layer 10A contains a sufficient amount of the resin layer 12 to fill the depressions in the surface 10s. Therefore, the minute depressions in the surface 10s can be sufficiently filled with the resin layer 12. That is, the surface roughness of the surface 10s can be improved by the resin layer 12, thereby improving the adhesion between the surface layer 10A and the adhesive layer 13. This improves the bonding between the negative electrode composite layer 10 and the separator 116.

The average thickness AT2 of the resin layer 12 is greater than the surface roughness Ra2 of the surface 10s of the negative electrode composite layer 10. Thus, the resin layer 12 has a sufficient volume to fill the depressions in the surface 10s. Therefore, the resin layer 12 can sufficiently fill the gaps formed by the magnetic alignment of the graphite particles 11 (see areas A0). Since the flatness of the surface 10s of the negative electrode composite layer 10 is improved by the resin layer 12, the bonding between the negative electrode composite layer 10 and the separator 116 is improved.

### Orientation Angle of Graphite Particles

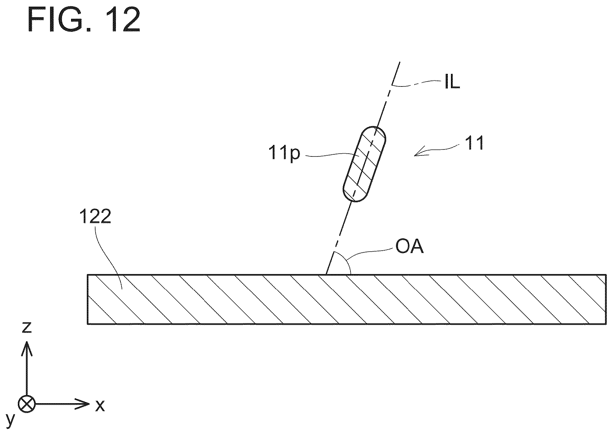

Referring to FIG. 12, an orientation angle of the graphite particles 11 is described. FIG. 12 illustrates a cross-sectional view similar to that illustrated in FIG. 3. FIG. 12 illustrates a single graphite particle 11 as a representative. The graphite particle 11 comprises a layer plane 11p. As described above, the layer plane 11p is the (002) plane parallel to the graphite layers. The direction in which the layer plane 11p extends is indicated by an imaginary line IL. Further, an angle formed between the imaginary line IL and the surface of the negative electrode current collector 122 is termed an orientation angle OA.

The orientation angle OA can be measured in a cross-sectional SEM image of the negative electrode composite layer 10. For example, in a cross section of the negative electrode composite layer 10 taken at a random position, multiple (e.g., 50) graphite particles 11 may be extracted from the surface layer 10A. Then, an orientation angle OA may be measured for each of the extracted graphite particles 11 to determine an arithmetic mean value of the measured values.

The inventors of the present invention have found that without the above-described resin layer forming steps (steps S55, S95), the average of orientation angles in the surface layer 10A is less than 45 degrees in the completed secondary battery 1. The inventors have further found that with the resin layer forming steps, the average of orientation angles in the surface layer 10A is 45 degrees or greater in the completed secondary battery 1. This allows lithium ions migrating from the positive electrode 112 to be easily inserted between the graphite particles 11 in the surface layer 10A, which serves as an inlet for the lithium ions. Therefore, the internal resistance in the secondary battery 1 can be reduced.

Here, the reason why the average orientation angle of 45 degrees or greater can be achieved in the surface layer 10A by the formation of resin layer 12 is described. When the graphite particles 11 in the surface layer 10A are magnetically aligned, the average orientation angle of the graphite particles 11 becomes 45 degrees or greater. If the resin layer 12 is not formed, the surface layer 10A undergoes pressure in the press step (step S100) and the hot-pressing step (step S 130), thereby pushing the graphite particles 11 down. As a result, the average orientation angle of the graphite particles 11 becomes less than 45 degrees. In contrast, if the resin layer 12 is formed, the resin layer 12 sufficiently fills gaps formed by the magnetic alignment of the graphite particles 11 (see areas A3 in FIG. 11). That is, the resin layer 12 supports the graphite particles 11. Thus, even if the surface layer 10A undergoes pressure, the graphite particles 11 are less likely to be pushed down.

As above, whether the resin layer 12 has been formed or not and whether the resin layer forming step has been performed or not can be determined based on whether or not the average orientation angle in the surface layer 10A is 45 degrees or greater.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

### Modification

The timing at which the resin layer forming step (steps S55, S95) is performed is not limited to the timing described in the present embodiment, and the step may performed at various other timings. For example, the resin layer forming step may be performed before the drying step (step S50) or after the press step (step S100).

## Claims

1. A secondary battery (1) comprising a positive electrode (112) and a negative electrode (114) facing each other with a separator (116) interposed therebetween,
wherein the negative electrode comprises:
a negative electrode current collector (122);
a negative electrode composite layer (10) disposed on the negative electrode current collector and containing graphite particles (11) and a binder (14); and
a resin layer (12) disposed between a surface of the negative electrode composite layer and the separator;
wherein
the negative electrode composite layer comprises:
a surface layer (10A) in contact with the resin layer; and
a main layer (10B) located between the surface layer and the negative electrode current collector,
in an XRD profile of the main layer, a degree of orientation, which is defined as an intensity ratio obtained by dividing an intensity of a (110) plane of a graphite crystal by an intensity of a (002) plane of the graphite crystal, is 0.03 or greater, and
a content of a material of the resin layer in the surface layer is higher than a content of the binder in the main layer.

2. The secondary battery according to claim 1, wherein
an orientation angle is defined as an angle formed between a layer plane of the graphite particle having a layered structure and a surface of the negative electrode current collector, and
an average orientation angle in the surface layer is 45 degrees or greater.

3. The secondary battery according to claim 1 or 2, wherein the material of the resin layer is same as a material of the binder.

4. The secondary battery according to any one of claims 1 to 3, wherein the material of the resin layer includes an ion-permeable resin.

5. The secondary battery according to any one of claims 1 to 4, wherein the material of the resin layer and the binder includes an acrylic resin or a polyvinylidene fluoride resin.

6. A method of manufacturing a secondary battery in which a positive electrode and a negative electrode face each other with a separator interposed therebetween, the method comprising:
forming (S2) an adhesive layer on a surface of the separator;
applying (S20) a paste containing graphite particles and a solvent onto a surface of a negative electrode current collector to form a negative electrode composite layer;
applying (S40) an external magnetic field to the negative electrode composite layer;
drying (S50) the negative electrode composite layer after the external magnetic field has been applied;
forming (S55) a resin layer constituted of an ion-permeable resin on a surface of the negative electrode composite layer after the drying; and
heating (S130) the adhesive layer and the resin layer while the adhesive layer and the resin layer are in contact with each other.

7. The manufacturing method according to claim 6, wherein the applying of the paste includes applying the ion-permeable resin onto the surface of the negative electrode composite layer.

8. The manufacturing method according to claim 6 or 7, wherein a thickness of the resin layer is greater than an arithmetic mean roughness of the surface of the negative electrode composite layer.

9. The manufacturing method according to any one of claims 6 to 8, wherein the resin layer includes an acrylic resin or a polyvinylidene fluoride resin.
